# EUROPEAN PATENT SPECIFICATION

(11) **EP 0 914 193 B1**
(45) Date of publication and mention of the grant of the patent: **04.07.2001**
(21) Application number: 97934531.1
(22) Date of filing: 22.07.1997
(51) Int. Cl.: B01D 53/86, B01J 27/16

(54) **CATALYTIC INCINERATION PROCESS AND CATALYST COMPOSITION USEFUL THEREFOR**
VERFAHREN ZUR KATALYTISCHE VERBRENNUNG UND DAFÜR VERWENDBARE KATALYSATORZUSAMMENSETZUNG
PROCEDE D'INCINERATION CATALYTIQUE ET COMPOSITION DE CATALYSEUR UTILISABLE PREVU A CET EFFET

(30) Priority: 26.07.1996 EP 96202133
(43) Date of publication of application: 12.05.1999
(73) Proprietor: SHELL INTERNATIONALE RESEARCH MAATSCHAPPIJ B.V., 2596 HR Den Haag (NL)
(72) Inventor: VAN DEN BRINK, Peter, John, NL-1031 CM Amsterdam (NL); HUISMAN, Hans, Michiel, NL-1031 CM Amsterdam (NL); VERMEULEN, Thomas, Stanley, NL-1031 CM Amsterdam (NL)
(86) International application number: EP9704011
(87) International publication number: WO9804340

(56) References cited:
- GB-A- 1 558 656
- US-A- 4 640 908
- US-A- 4 788 171

## Description

The present invention relates to a process for the catalytic incineration of gases containing sulphur compounds, particularly hydrogen sulphide, to a catalyst composition which can be suitably used in such incineration process, and to the preparation of that catalyst composition.

The presence of hydrogen sulphide (H₂S) in process waste gases, which are released into the air, is bound to very stringent rules in most industrialised parts of the world. Waste gases containing H₂S are produced in many different processes, such as, for instance, in the well-known Claus process. This Claus process produces an effluent which may contain over 5% by volume of H₂S in addition to other sulphur compounds. A known method for reducing the level of sulphur compounds and H₂S in the Claus off-gas is, for instance, subjecting this off-gas to a catalytic reduction treatment, thereby converting the sulphur compounds present into H₂S, and subsequently removing the bulk of H₂S by an absorption treatment using a suitable H₂S-selective absorption solvent. The absorption solvent containing the bulk of the H₂S is then regenerated, after which the desorbed H₂S is returned to the Claus-unit and the cleaned solvent is re-used. The final off-gas from the absorption treatment containing only minor amounts of H₂S is normally incinerated, thereby converting H₂S into sulphur dioxide (SO₂), which is less harmful than H₂S. Tolerable levels of SO₂ in waste gases released into the air are, consequently, much higher under air pollution regulations than the tolerable levels of H₂S. The incinerated gas should normally contain less than 10 ppm on a volume basis of H₂S.

Incineration of H₂S-containing waste gases nowadays is normally conducted either in a catalytic process or in a non-catalytic (thermal) process. Major considerations for applying a catalytic incineration process are, relative to a non-catalytic incineration process, a reduced heat input and a more selective formation of SO₂, whereby the formation of SO₃ is suppressed as much as possible for reasons of corrosion and air pollution abatement.

In U.K. patent specification No. GB 1, 558,656 a process for the catalytic incineration of H₂S-containing waste gases is disclosed, wherein such waste gas is contacted with a stoichiometric excess of oxygen having regard to the contained H₂S in the presence of a catalyst composition comprising copper (Cu) and bismuth (Bi) as the catalytically active components supported on a carrier material, which suitably is alumina. Although the CuBi/alumina composition performs satisfactorily in many respects, there is room for improvement. Firstly, the alumina carrier may be susceptible to sulphation and consequent deactivation, particularly in the presence of substantial amounts of SO₂ and oxygen. Secondly, the activity of the catalyst in the oxidation of carbonyl sulphide (COS), a component which is also often present in H₂S-containing waste gases from Claus off-gas treating operations as described hereinbefore, could be improved.

In U.S. patent No. 4,169,136 a process for the catalytic incineration of H₂S-containing waste gases is disclosed, wherein the waste gas is contacted with oxygen in the presence of a catalyst comprising vanadium as the catalytically active component supported on a porous, non-alkaline refractory oxide, such as alumina or hydrogen-mordenite. Acidic metal phosphates, including aluminium phosphate, are also disclosed to be useful as carrier material. This U.S. patent recognises the possible sulphation and consequent deactivation problems that may occur when employing incineration catalysts comprising an alumina carrier. Other carrier materials are proposed, but of these, hydrogen-mordenite is presented as the most suitable option. Furthermore, in case a stoichiometric excess of oxygen having regard to the contained H₂S is used during the incineration, either the feed waste gas should contain at least 100 ppmv hydrogen or the operating temperature should be maintained below 260 °C (500 °F) in order to avoid the formation of too much SO₃. Accordingly, if the feed waste gas contains essentially no hydrogen either the flow of oxygen should be limited or the operating temperature should be maintained below 260 °C (500 °F). It would be advantageous if a catalytic incineration process could be developed not having these constraints.

The problem of sulphation and resulting deactivation of alumina-based materials in processes for removing H₂S from waste gases is also discussed in International patent applications Nos. WO 94/14525 and WO 94/14703, which both disclose processes for removing H₂S from gases by absorption. The absorbents used comprise an aluminium phosphate support and one or more metal oxides.

More specifically, in International patent application No. WO 94/14525 there is disclosed a process for desulphurising gases by contacting the gas at elevated temperature with an absorbent based on one or more molybdenum and/or tungsten oxides as a first metal oxide component, which interacts with a second metal oxide component, whereby both metal oxide components are suitably provided on a support. As the second metal oxide component oxides of iron, vanadium, copper, manganese, cobalt, zinc and/or chromium may be used, whereby an absorbent based on iron(II)molybdate is disclosed to be particularly useful. Suitable support materials include silica, zeolites and aluminium phosphate, the latter being presented as a particularly suitable support.

In International patent application No. WO 94/14703 a process for removing H₂S from gases is disclosed, which process comprises contacting the gases with a solid substance comprising at least one metal component on an aluminium phosphate support. The preferred metal component is an oxide or mixed oxide of iron and/or molybdenum, iron molybdate or any mixture of these.

In the process of both above International patent specifications H₂S is removed from gases by (chemical) absorption, that is, H₂S reacts with the metal oxides present to form metal sulphides. The absorbent loaded with metal sulphide should then be regenerated by conversion of the metal sulphides with oxygen to form metal oxide and sulphur, which can be obtained as elemental sulphur as SO₂ or as a mixture thereof, depending on the amount of oxygen used.

The present invention, however, relates to a method for catalytically incinerating sulphur compounds, in particular H₂S, present in waste gases. This incineration method involves selectively reacting the H₂S with oxygen to form SO₂ and substantially no SO₃, whilst at the same time also oxidising other gaseous sulphur components present in the waste gas, such as carbonyl sulphide (COS) and carbon sulphide (CS₂). It will be understood that this is an entirely different process involving different chemical reactions and kinetics. An advantage of a catalytic incineration process over an absorption process as disclosed in both aforementioned International patent specifications, is that in an incineration process regeneration of the catalyst used is less frequently required than in an absorption process.

The present invention aims to provide an effective process for incinerating sulphur-containing compounds, and particularly H₂S and COS, from off-gases containing such compounds by means of catalytic incineration. More specifically, the present invention aims to provide a process wherein sulphur-containing compounds, such as H₂S, COS and CS₂, are effectively removed from off-gases by catalytically converting them with oxygen into SO₂, thereby forming essentially no SO₃. The present invention furthermore aims to provide a long-life catalyst for use in such a process for incineration of sulphur compounds, including H₂S and COS, present in gases, which catalyst exhibits an excellent performance in that it has (i) a high activity in converting sulphur compounds, (ii) a high selectivity for sulphur compounds, (iii) a high selectivity in converting sulphur compounds into SO₂ with substantially no SO₃ being formed, (iv) a high thermal stability and (v) a high resistance against sulphation.

Accordingly, the present invention relates to a process for the incineration of gases containing sulphur compounds by contacting these gases with an oxygen-containing gas in the presence of a catalyst comprising a carrier containing aluminium and phosporus, characterised in that the carrier is phosphated alumina.

The carrier used is phosphated alumina, which essentially is alumina or aluminium hydroxide which has been treated with phosphate. Most preferably this phosphated alumina is alumina having a phosphate-enriched surface, i.e. alumina of which the surface is substantially completely covered with a coating of phosphate-enriched alumina. The expression "surface" as used in this connection refers to the internal plus external surface of the alumina. It will be understood that the internal surface is the surface of the walls of the pores which are present in an alumina carrier particle, whereas the external surface is the outer surface of such alumina carrier particle. Alternatively, the carrier used is aluminium phosphate, such as described in International patent applications Nos. WO 94/14525 and WO 94/14703. As has also been described in these patent specifications, such aluminium phosphate support material is conveniently obtained by putting together an aqueous solution of an aluminium salt, such as aluminium nitrate, and an aqueous solution of a phosphate salt, such as ammonium phosphate, after which aluminium phosphate precipitates. The phosphorus content of the carrier used may vary within wide limits and normally will be at least 0.5% by weight, calculated as weight precentage of elemental phosphorus relative to the total weight of the carrier. The phosphorus content will generally not exceed 25% by weight. Preferably, the phosphorus content is between 1 and 15% by weight.

In a preferred embodiment of the present invention the catalyst used in the incineration process further comprises at least one catalytically active metal component selected from bismuth, iron, molybdenum and chromium, preferably bismuth. In addition to this component(s), the catalyst preferably comprises a further metal component selected from copper and one or more Group IIA metals.

The gas to be treated may be any gas containing oxidisable sulphur compounds, which need to be removed from that gas, including H₂S, COS and CS₂. In general, the H2S content of the gases to be treated in the present process may vary within wide limits and will normally range from 30 ppm on a volume-bases (ppmv) up to 5% by volume. At higher levels, additional preceding dilution treatments, absorption treatments or combined reduction and absorption treatments are normally required in order to avoid the generation of too much heat in the exothermic incineration reaction, thus making the incineration ineffective from both an economic and a processing perspective. Most suitably, the gas to be treated comprises between 50 ppmv and 1% by volume of H₂S. Particularly the H₂S-containing off-gases from the absorption treatment of reduced Claus off-gases, which normally comprise between 50 ppmv and 500 ppmv of H₂S, are effectively treated in a catalytic incineration process employing the present catalyst composition. H₂S levels in the incinerated gas in most industrialised countries should be less than 10 ppmv.

Other sulphur compounds like COS and CS₂ are usually present in the gas to be treated in smaller quantities than H₂S. Accordingly, the individual levels of COS and CS₂ are normally below 0.5% by volume, whilst in the off-gases from the absorption treatment of reduced Claus off-gases these levels are normally even less than 100 ppmv.

The amount of oxygen to be supplied to the incineration zone should be sufficient to convert all sulphur compounds present into SO₂, which implies that at least a stoichiometric amount of oxygen relative to the amount of sulphur compounds present should be used. It is preferred to use a stoichiometric excess of oxygen relative to the amount of sulphur compounds present in the gas to be incinerated. In this way, namely, it is assured that a sufficiently large quantity of sulphur compounds is converted. Accordingly, it is preferred to use at least 1.5 times the stoichiometric amount of oxygen relative to the amount of sulphur compounds present. Normally, at least twice the stoichiometric amount of H₂S present is also sufficient. The upper limit of oxygen to be supplied is in fact determined by economic and practical considerations. In this connection it is important that in certain circumstances (e.g. high temperatures) too much oxygen may favour the formation of SO₃, which is undesired. In practice this implies that normally up to five times the stoichiometric amount of oxygen relative to the amount of sulphur compounds present in the gas to be treated will be used. The source of oxygen may be pure oxygen, air or a mixture of these or any other gaseous stream containing sufficient quantities of oxygen, provided the other gaseous components present do not adversely affect the envisaged incineration reactions.

The reaction conditions to be applied in the catalytic incineration process are those known in the art, for instance from U.K. patent specification No. GB 1, 558, 656 and U.S. patent No. 4,169,136 which have both been discussed hereinbefore, and include operating temperatures of from 150 to 450 °C, preferably 250 to 420 °C, operating pressures from 0.5 to 10 bar, preferably 1 to 5 bar, but most conveniently atmospheric pressure, and gaseous hourly space velocities (GHSV) of from 500 to 50,000 vol/vol/hr, preferably from 2,000 to 10,000 vol/vol/hr.

The present invention also relates to a specific catalyst composition which can be suitably applied in the incineration process described hereinbefore. Accordingly, the present invention also relates to a catalyst composition comprising bismuth as a catalytically active metal component supported on a refractory oxide carrier comprising aluminium and phosphorus. The bismuth is suitably present in an amount in the range of from 0.5 to 10% by weight and preferably in an amount of from 0.8 to 5.0% by weight, said weight percentages indicating the amount of metal based on the total weight of the catalyst composition. Using bismuth in amounts lower than 0.5% by weight is possible, but will normally not result in a sufficiently high catalytic activity. On the other hand, applying amounts of more than 10% by weight will not result in a substantially improved catalytic performance and is also less preferred from a cost perspective.

The catalyst composition according to the present invention suitably, though not necessarily, comprises a second metal component in addition to bismuth. It is, accordingly, preferred that at least one metal component selected from copper and a Group IIA metal is present as a second metal component in such amount that the molar ratio of this second metal component relative to bismuth is at least 0.2 and preferably does not exceed 20. More preferably said molar ratio has a value in the range of from 0.5 to 10. Particularly suitable Group IIA metals for application as the second metal component are magnesium, calcium and barium, though beryllium and strontium may also be applied. Most preferably the second metal component is copper and/or calcium.

Both bismuth and the second metal component may be present in elemental form and/or as a compound, such as oxides, hydroxides, sulphides, nitrates, phosphates, sulphates, halides, acetates, citrates, carbonates or mixtures of two or more of these. Suitably, the metal components are present as oxides, sulphates and/or phosphates at the start of the incineration process and may be converted at least partly into sulphides or sulphates during the incineration process under the operating conditions applied. However, it appears not to be particularly critical in which form the metals are present on the catalyst.

The carrier used is a refractory oxide carrier comprising aluminium and phosphorus. Suitable carriers include both aluminium phosphate and phosphated alumina. Although aluminium phosphate may be applied as support material for the present catalyst composition, it is preferred to use a phosphated alumina, because aluminium phosphate powder may be relatively difficult to shape into appropriate catalyst bodies.

As has been explained hereinbefore phosphated alumina is alumina, which has been treated with a phosphate, so that its surface (internal plus external surface) is enriched with phosphate. Preferably the entire surface of the alumina is enriched with phosphate. This implies basically that the alumina is covered with a coating of phosphate-enriched alumina. The exact composition of the phosphate-enriched coating layer may vary. It can be aluminium phosphate, but it can also be alumina containing phosphate domains. It is, however, important that those sites of the alumina, which are most readily prone to sulphation once being exposed to gases comprising sulphur compounds, are protected from sulphation by the presence of phosphate ions. It will be understood that the exact composition and thickness of the phosphate-ennriched coating layer depends upon the way in which the phosphate-treated alumina is prepared, more particularly on factors such as severity of conditions applied during the treatment with phosphate and phosphate concentration of the treating solution.

In a further aspect the present invention relates to a process for the preparation of a catalyst composition as described hereinbefore, which process comprises the steps of:
(a) treating alumina with a solution containing phosphate ions, thus obtaining phosphated alumina
(b) treating the phosphated alumina with one or more solutions comprising one or more dissolved salts of the catalytically active metal components
(c) drying and calcining the thus impregnated phosphated alumina.

In step (a) those sites of the alumina which are prone to sulphation and which are present at or near the surface of the alumina, should react with phosphate ions, originating from either a dissolved phosphate salt or from phosphoric acid, to form a phosphate-enriched surface. As a result of the phosphate-enriched surface, the final incineration catalyst has an increased resistance to sulphation as compared with alumina and also has a very good thermal stability, thus making it useful as a catalyst carrier for an incineration catalyst.

The thickness of the phosphate-enriched layer on the surface of the phosphated alumina is predominantly determined by the amount of phosphate used relative to the amount of alumina.

Steps (a) and (b) may be carried out simultaneously or successively. If carried out simultaneously, the alumina or aluminium hydroxide carrier particles can be treated with a single impregnating solution containing phosphate ions and one or more dissolved salts of the catalytically active metal components. Alternatively, alumina or aluminium hydroxide can be co-extruded with a solution comprising phosphate ions and dissolved salts of the catalytically active metal components.

If steps (a) and (b) are carried out successively, step (a) may involve impregnation or co-extrusion.

In case of impregnation, the alumina (e.g. γ-alumina or η-alumina) or aluminium hydroxide carrier particles are contacted with an aqueous solution of a phosphate salt, such as ammonium phosphate, or of phosphoric acid. In case of a co-extrusion step (a), alumina or aluminium hydroxide are extruded together with an aqueous solution containing phosphate ions.

If step (b) is carried out after stap (a), it suitably involves impregnating the phosphated alumina obtained in step (a), either in a wet or dry form, with one or more solutions comprising one or more dissolved salts of the catalytically active metal components to be used. Soluble salts that may be used, inter alia include nitrates, sulphates, citrates and lactates of the appropriate metals. Most conveniently, one single impregnating solution comprising all catalytically active metals in dissolved form is used. However, it is also possible to use distinct impregnating solutions, which each contain a single catalytically active metal and which are used subsequently, optionally with drying in-between. A preferred method of impregnating the carrier is the so-called pore volume impregnation, which involves the treatment of a carrier with a volume of impregnating solution, whereby said volume of impregnating solution is substantially equal to the pore volume of the carrier. In this way, full use is made of the impregnating solution.

Alternatively, step (b) comprises a precipitation of catalytically active metal components onto the phosphated alumina carrier particles. This can suitably be attained by forming insoluble salts of the catalytically active metals in the presence of the phosphated alumina carrier particles into which the insoluble salts formed can then precipitate.

Step (c), finally, involves drying and calcining of the impregnated phosphated alumina. Drying is normally carried out at temperatures in the range of from 100 to 400 °C, preferably 150 to 350 °C, whilst calcination is suitably conducted at a temperature in the range of from 300 to 650 °C, preferably 350 to 550 °C. The calcination may be carried out in an inert atmosphere, such as in a nitrogen atmosphere, but it is preferred to calcine the material in air, thus converting at least part of the metal components present in the catalyst composition into metal oxides.

The invention is further illustrated by the following examples without restricting the scope of the present invention to these particular embodiments.

### Example 1

A phosphated alumina support was prepared as follows. 93.0 g of η-alumina spheres (diameter 4 mm) were contacted with an aqueous bisammonium hydrogenphosphate solution (17.0 g/l (NH₄)₂HPO₄) for sufficient time to allow the η-alumina spheres to be impregnated. The phosphated alumina thus obtained had a phosphate loading of 11.7% wt (amount of PO₄³⁻ based on total weight of support; corresponding with a phosphorus (P) content of 3.8% wt calculated as elemental P relative to weight of the support) and was subsequently impregnated with an aqeous solution of copper(II) sulphate and bismuth citrate, after which the impregnated phosphated alumina was dried and calcined at 480 °C for one-and-a-half hour.

The above procedure was repeated twice, except that the first time the phosphated alumina was impregnated with an aqueous solution of bismuth citrate only (Catalyst B) and the second time the phosphated alumina was impregnated sequentially with a basic solution of bismuth citrate and a solution of calcium nitrate (Catalyst C).

Properties of Catalysts A, B and C are listed in Table I. In this table "M" refers to the second metal component beside Bi, "M/Bi" indicates the molar ratio between the optional second metal component and Bi and PO₄³⁻ (in % wt) refers to the phosphate loading of the phosphated alumina support.

### Comparative Example 1

The procedure of Example 1 for preparing Catalyst A is repeated, except that the η-alumina spheres are not treated with bisammonium hydrogenphosphate prior to impregnation with the aqeous solution of copper(II) sulphate and bismuth citrate.

Properties of the comparative Catalyst A' are also listed in Table I.

**TABLE I**

| Catalyst properties | | | | |
|---|---|---|---|---|
| | Cat. A | Cat. B | Cat. C | Cat. A' |
| M | Cu | - | Ca | Cu |
| M (% wt) | 1.0 | - | 1.0 | 1.0 |
| Bi (% wt) | 3.0 | 3.0 | 3.0 | 3.0 |
| M/Bi | 1.1 | - | 1.7 | 1.1 |
| PO₄³⁻ (% wt) | 11.7 | 11.7 | 11.7 | - |

### Example 2

A gas consisting of 0.19 vol% COS, 0.019 vol% H₂S, 0.023 vol% CO₂, 4.3 vol% O₂, 5 vol% H₂ and balance up to 100 vol% argon was contacted with a bed of Catalyst A. The conversion of COS (in vol%) present in the gas was measured at 300 °C, 350 °C and 400 °C. Since of the group of sulphur compounds consisting of COS, CS₂ and H₂S, COS is the most difficult to oxidise, only the COS conversion was measured: the conversion of H₂S (and CS₂) is anyhow higher than the conversion of COS. Subsequently, the temperature was increased until plume formation, indicating the formation of the undesired SO₃, occurred at the outlet of the reactor. The temperature at which this plume formation started to occur was measured. This temperature (Tₚₗᵤₘₑ) is an indication of the maximum operating temperature of the catalyst without SO₃ formation occurring and hence is an indication of the selectivity of the catalyst towards the conversion of the sulphur compounds present into SO₂: the higher this temperature, the higher the selectivity of the catalyst. Results are listed in Table II.

The same procedure was repeated with Catalysts A', B and C. Results are also listed in Table II.

**TABLE II**

| COS conversion and selectivity | | | | |
|---|---|---|---|---|
| | Temperature | | | Tₚₗᵤₘₑ (°C) |
| Catalyst | 300 °C | 350 °C | 400 °C | |
| A | 32 | 66 | 93 | 446 |
| B | 43 | 84 | 100 | 565 |
| C | 43 | 74 | 97 | 540 |
| A' | 28 | 60 | 89 | 445 |

From Table II it can be seen that the Catalysts A, B and C according to the present invention are consistently more active than the known CuBi/alumina catalyst A'.

Furthermore, Table II shows that the catalysts according to the present invention are at least as selective as the known CuBi/alumina catalyst, whilst the Cu-free catalysts according to the present invention (i.e. Catalysts B and C) even exhibit a significantly higher selectivity towards the conversion of sulphur compounds present in the feed gas into SO₂.

### Example 3

The thermal stability of the catalysts having a phosphated alumina support as compared with catalysts having an alumina support was tested. To that end the degree of sintering was determined of alumina spheres (4 mm diameter) and of the same alumina spheres which were phosphated in the way described in Example 1. The degree of sintering was determined by measuring the surface area (BET method) of both supports before and after an ageing treatment. The ageing treatment involved subjecting both supports to a temperature of 1000 °C for 24 hours. The decrease in surface area is representative for the degree of sintering and hence for the thermal stability of the material.

The results are indicated in table III. "P-alumina" refers to phosphated alumina, "SA" to surface area and "SA loss" refers to the factor with which the surface area has decreased as a result of the ageing treatment.

**TABLE III**

| Thermal stability | | | |
|---|---|---|---|
| Support | Ageing | SA (m²/g) | SA loss |
| Alumina | no | 349 | - |
| Alumina | yes | 37 | 9.4 |
| P-alumina | no | 264 | - |
| P-alumina | yes | 74 | 3.6 |

From Table III it clearly follows that catalysts comprising a phosphated alumina carrier, i.e. the catalysts according to the present invention, have a lower degree of sintering and hence a higher thermal stability than the prior art catalysts comprising an alumina carrier.

## Claims

1. Process for the incineration of gases containing sulphur compounds by contacting these gases with an oxygen-containing gas in the presence of a catalyst comprising a carrier containing aluminium and phosphorus, characterised in that the carrier is phosphated alumina.

2. Process according to claim 1, wherein the carrier comprises alumina having a phosphate-enriched surface.

3. Process according to claim 1 or 2, wherein the catalyst further comprises at least one catalytically active metal component selected from bismuth, iron and chromium, preferably bismuth.

4. Process according to claim 3, wherein the catalyst comprises a further metal component selected from copper and one or more Group IIA metals.

5. Catalyst composition suitable for a process as claimed in any of claims 1-4, comprising bismuth as a catalytically active metal component supported on a refractory oxide carrier comprising phosphated alumina.

6. Catalyst composition according to claim 5, wherein bismuth is present in an amount in the range of from 0.5 to 10% by weight, preferably 0.8 to 5.0% by weight, said weight percentages indicating the amount of metal based on the total weight of the catalyst composition.

7. Catalyst composition according to claim 5 or 6, wherein at least one metal component selected from copper and a Group IIA metal is present as a second metal component in such amount that the molar ratio of this second metal component relative to bismuth is at least 0.2 and preferably does not exceed 20.

8. Catalyst composition according to claim 7, wherein the second metal component is copper and/or calcium.

9. Catalyst composition according to any of claims 5 to 8, wherein the refractory oxide carrier is alumina having a phosphate-enriched surface.

10. Process for the preparation of a catalyst composition according to any one of claims 5 to 9, which process comprises the steps of:
(a) treating alumina with a solution containing phosphate ions, thus obtaining phosphated alumina,
(b) treating the phosphated alumina with one or more solutions comprising one or more dissolved salts of the catalytically active metal components,
(c) drying and calcining the thus impregnated phosphated alumina.

11. Process according to claim 10, wherein steps (a) and (b) are carried out simultaneously.

12. Process according to claim 10, wherein steps (a) and(b) are carried out successively.

## Patentansprüche

1. Verfahren zur Verbrennung von Schwefelverbindungen enthaltenden Gasen durch Inkontaktbringen dieser Gase mit einem sauerstoffhältigen Gas in Gegenwart eines Katalysators, der einen Aluminium und Phosphor enthaltenden Träger umfaßt, dadurch gekennzeichnet, daß der Träger phosphatiertes Aluminiumoxid ist.

2. Verfahren nach Anspruch 1, worin der Träger Aluminiumoxid umfaßt, das eine phosphatangereicherte Oberfläche aufweist.

3. Verfahren nach Anspruch 1 oder 2, worin der Katalysator zusätzlich wenigstens eine katalytisch aktive, unter Bismuth, Eisen und Chrom ausgewählte Metallkomponente, vorzugsweise Bismuth, umfaßt.

4. Verfahren nach Anspruch 3, worin der Katalysator eine weitere, unter Kupfer und einem oder mehreren Gruppe IIA-Metallen ausgewählte Metallkomponente umfaßt.

5. Für ein Verfahren nach einem der Ansprüche 1 bis 4 geeignete Katalysatorzusammensetzung, umfassend Bismuth als eine katalytisch aktive Metallkomponente, aufgebracht auf einen Feuerfestoxidträger, der phosphatiertes Aluminiumoxid enthält.

6. Katalysatorzusammensetzung nach Anspruch 5, worind das Bismuth in einer Menge im Bereich von 0,5 bis 10 Gew.-%, vorzugsweise 0,8 bis 5,0 Gew.-% vorliegt, wobei die Gewichtsprozentsätze die Metallmenge angeben, bezogen auf das Gesamtgewicht der Katalysatorzusammensetzung.

7. Katalysatorzusammensetzung nach Anspruch 5 oder 6, worin wenigstens eine Metallkomponente, ausgewählt unter Kupfer und einem Gruppe IIA-Metall, als eine zweite Metallkomponente in einer solchen Menge vorliegt, daß das Molverhältnis dieser zweiten Metallkomponente zu Bismuth wenigstens 0,2 beträgt und vorzugsweise 20 nicht überschreitet.

8. Katalysatorkomponente nach Anspruch 7, worin die zweite Metallkomponente Kupfer und/oder Calcium ist.

9. Katalysatorzusammensetzung nach einem der Ansprüche 5 bis 8, worin der Feuerfestoxidträger Aluminiumoxid ist, das eine phosphatangereicherte Oberfläche aufweist.

10. Verfahren zur Herstellung einer Katalysatorzusammensetzung nach einem der Ansprüche 5 bis 9, welches Verfahren die folgenden Stufen umfaßt:
(a) Behandeln von Aluminiumoxid mit einer Phosphationen enthaltenden Lösung unter Ausbildung von phosphatiertem Aluminiumoxid,
(b) Behandeln des phosphatierten Aluminiumoxids mit einer oder mit mehreren Lösungen, die ein oder mehrere gelöste Salze der katalytisch aktiven Metallkomponenten enthält beziehungsweise enthalten,
(c) Trocknen und Kalzinieren des so imprägnierten phosphatierten Aluminiumoxids.

11. Verfahren nach Anspruch 10, worin die Stufen (a) und (b) gleichzeitig ausgeführt werden.

12. Verfahren nach Anspruch 10, worin die Stufen (a) und (b) aufeinanderfolgend ausgeführt werden.

## Revendications

1. Procédé d'incinération de gaz contenant des composés de soufre par la mise en contact de ces gaz avec un gaz contenant de l'oxygène en présence d'un catalyseur comprenant un support contenant de l'aluminium et du phosphore, caractérisé en ce que le support est de l'alumine phosphatée.

2. Procédé suivant la revendication 1, dans lequel le support comprend de l'alumine ayant une surface enrichie en phosphate.

3. Procédé suivant l'une ou l'autre des revendications 1 et 2, dans lequel le catalyseur comprend de plus au moins un composant métallique catalytiquement actif choisi parmi le bismuth, le fer et le chrome, avantageusement le bismuth.

4. Procédé suivant la revendication 3, dans lequel le catalyseur comprend un autre composant métallique choisi parmi le cuivre et un ou plusieurs métaux du Groupe IIA.

5. Composition de catalyseur utilisable pour un procédé suivant l'une quelconque des revendications 1 à 4, comprenant du bismuth comme composant métallique catalytiquement actif fixé sur un support d'oxyde réfractaire comprenant de l'alumine phosphatée.

6. Composition de catalyseur suivant la revendication 5, dans laquelle le bismuth est présent en une quantité allant de 0,5 à 10% en poids, avantageusement de 0,8 à 5,0% en poids, lesdits pourcentages en poids indiquant la quantité de métal par rapport au poids total de la composition de catalyseur.

7. Composition de catalyseur suivant l'une ou l'autre des revendications 5 et 6, dans laquelle au moins un composant métallique choisi parmi le cuivre et un métal du Groupe IIA est présent comme second composant métallique en une quantité telle que le rapport molaire de ce second composant métallique par rapport au bismuth soit d'au moins 0,2 et avantageusement n'excède pas 20.

8. Composition de catalyseur suivant la revendication 7, dans laquelle le second composant métallique est du cuivre et/ou du calcium.

9. Composition de catalyseur suivant l'une quelconque des revendications 5 à 8, dans laquelle le support d'oxyde réfractaire est de l'alumine ayant une surface enrichie en phosphate.

10. Procédé de préparation d'une composition de catalyseur suivant l'une quelconque des revendications 5 à 9, lequel procédé comprend les étapes suivantes :
(a) le traitement d'alumine avec une solution contenant des ions phosphate, en obtenant ainsi une alumine phosphatée,
(b) le traitement de l'alumine phosphatée avec une ou plusieurs solutions comprenant un ou plusieurs sels dissous des composants métalliques catalytiquement actifs,
(c) le séchage et la calcination de l'alumine phosphatée ainsi imprégnée.

11. Procédé suivant la revendication 10, dans lequel les étapes (a) et (b) sont réalisées simultanément.

12. Procédé suivant la revendication 10, dans lequel les étapes (a) et (b) sont réalisées successivement.
